# EUROPÄISCHE PATENTSCHRIFT

(11) **EP 1 758 772 B1**
(45) Veröffentlichungstag und Bekanntmachung des Hinweises auf die Patenterteilung: **29.10.2008**
(21) Anmeldenummer: 05753151.9
(22) Anmeldetag: 22.06.2005
(51) Int. Cl.: B60S 1/40

(54) **VERBINDUNG ZWISCHEN EINEM WISCHARM UND EINEM WISCHBLATT SOWIE SCHEIBENWISCHERANORDNUNG**
CONNECTION BETWEEN A WIPER ARM AND A WIPER BLADE, AND WINDSHIELD WIPER SYSTEM
ELEMENT DE LIAISON ENTRE UN BRAS D'ESSUIE-GLACE ET UN BALAI D'ESSUIE-GLACE, ET ENSEMBLE D'ESSUIE-GLACE

(30) Priorität: 24.06.2004 DE 102004030429
(43) Veröffentlichungstag der Anmeldung: 07.03.2007
(73) Patentinhaber: Valeo Wischersysteme GmbH, 74321 Bietigheim-Bissingen (DE)
(72) Erfinder: SCHREMMER, Gerhard, 74321 Bietigheim-Bissingen (DE); WALTER, Klaus, 71679 Asperg (DE)
(74) Vertreter: Jahn, Wolf-Diethart
(86) Internationale Anmeldenummer: PCT/EP2005/006733
(87) Internationale Veröffentlichungsnummer: WO 2006/000393

(56) Entgegenhaltungen:
- WO-A-20/05002934
- DE-A1- 10 036 135
- DE-A1- 10 259 477
- DE-A1- 10 259 480
- US-A- 4 300 259

## Beschreibung

Die Erfindung bezieht sich auf eine Verbindung zwischen einem Wischarm einer Scheibenwischeranlage für Fahrzeuge und einem an einem Ende des Wischarmes vorgesehenen Wischblatt gemäß Oberbegriff Patentanspruch 1. Die Erfindung bezieht sich weiterhin auf eine Scheibenwischeranordnung, mit wenigstens einem Wischarm und einem an einem freien Ende des Wischarmes austauschbar vorgesehenen Wischblatt gemäß Oberbegriff Patentanspruch 13.

Verbindungen zwischen einem Wischblatt und einem Wischarm, bei denen das Wischblatt nach einem Wegkippen des Wischarmes von der Fahrzeugscheibe und nach einem Schwenken des Wischblattes relativ zum Wischarm von einem am Wischarm vorgesehenen, seitlich wegstehenden Verbindungszapfen oder Pin abgenommen oder umgekehrt für die Montage des Wischblattes dieses mit einem Verbindungsstück seitlich auf den Verbindungszapfen des Wischarmes aufgeschoben und dort dann durch Schwenken um die Achse des Verbindungszapfens axial gesichert werden kann, sind grundsätzlich bekannt (WO 00/73113 A1 bzw. DE 101 63 221 A1).

Allen diesen bekannten Verbindungen, die auch als Side-Pin-Anbindung bezeichnet werden, ist gemeinsam, dass für die axiale Verriegelung des Wischblattes am Wischarm, die ständig dann besteht, wenn das Wischblatt um den Verbindungszapfen relativ zum Wischarm in eine Position geschwenkt ist, die derjenigen entspricht, die das gegen die Fahrzeugscheibe anliegende Wischblatt relativ zum Wischarm aufweist, ist gemeinsam, dass für die axiale Verriegelung oder Sicherung am Wischarm ein Sicherungs- oder Verriegelungsabschnitt vorgesehen ist, der dann bei gesichertem Wischblatt eine Fläche dieses Wischblattes oder des Verbindungsstücks am Wischblatt hintergreift.

Nachteilig hierbei ist, dass die bekannten Lösungen materialaufwendig sind und außerdem die für die axiale Verriegelung verwendeten Elemente optisch störend in Erscheinung treten.

Eine Verbindung gemäß Oberbegriff des Anspruchs 1 ist aus DE-A-100 36 135 bekannt. Hier ist das Verriegelungselement ein Sicherungshaken, der aus ästhetischen Gründen den Wischarm bzw. einen Teil des Wischarmes an dessen der Scheibe zugewandten Seite hintergreift.

Auch diese Lösung ist materialaufwendig und führt gegebenenfalls zu einer größeren Bauhöhe im Bereich der Verbindung.

Aufgabe der Erfindung ist es, diese Nachteile zu beseitigen und eine Verbindung aufzuzeigen, die bei hoher Zuverlässigkeit mit reduziertem Materialaufwand und mit einem auch optisch ansprechendem Design realisiert werden kann. Zur Lösung dieser Aufgabe ist eine Verbindung entsprechend dem Patentanspruch 1 ausgebildet. Eine Scheibenwischeranordnung mit einer solchen Verbindung ist Gegenstand des Patentanspruches 13.

Bei einer bevorzugten Ausführungsform der Erfindung ist die axiale Sicherung des Wischblattes durch ein Verriegelungselement an einem Sicherungs- und Verstärkungselement realisiert, welches als Formteil bzw. Stanz-Biegeteil korrosionsbeständig aus Metallblech gefertigt und Bestandteil des wischblattseitigen Verbindungsstücks ist. Dieses Sicherungselement bildet dann nicht nur das Verriegelungselement, das für die axiale Sicherung eine dem Verbindungsstück benachbarte Fläche oder Wandung des Wischarmes hintergreift, sondern das Sicherungs- und Verstärkungselement übergreift mit seinem U-Profil bzw. mit den dortigen Schenkeln auch das Wischblatt bzw. den dortigen Träger oder Halter für den Wischergummi und für weitere Funktionselemente.

Durch ein einstückiges konstruktives Element, nämlich durch das Sicherungselement ist somit die axiale Sicherung, aber zugleich auch die Sicherung weiterer Funktionselemente des Wischblattes auf dem Verbindungszapfen gewährleistet, womit sich eine besonders zuverlässige Konstruktion ergibt. Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in sehr vereinfachter Teildarstellung eine Draufsicht auf einen Wischarm und auf ein an diesem Wischarm gehaltenes Wischblatt einer Scheibenwischeranlage für Fahrzeuge;
- Fig. 2: in Teildarstellung den Wischarm sowie das Wischblatt in Seitenansicht an der Verbindung bzw. Side-Pin-Anbindung;

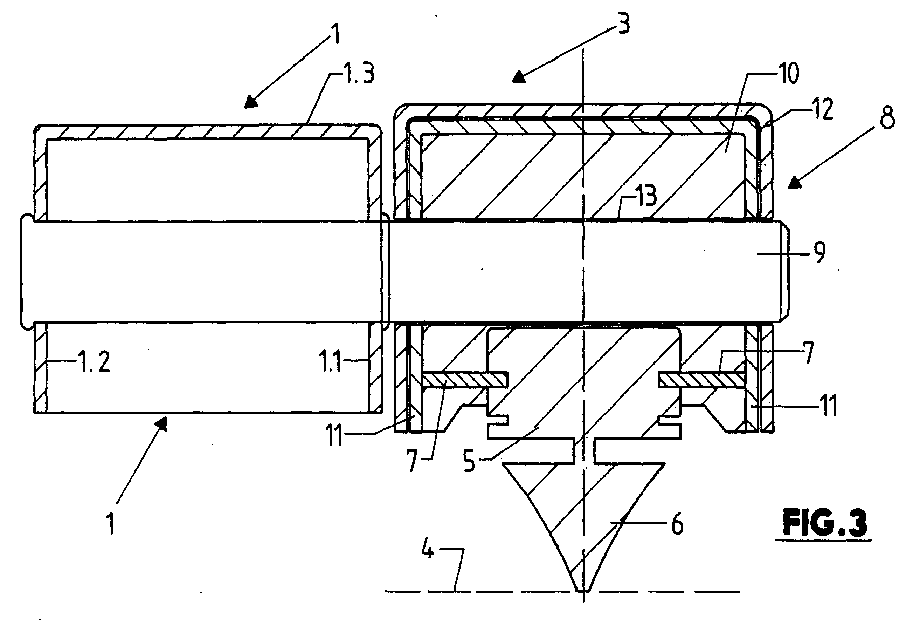

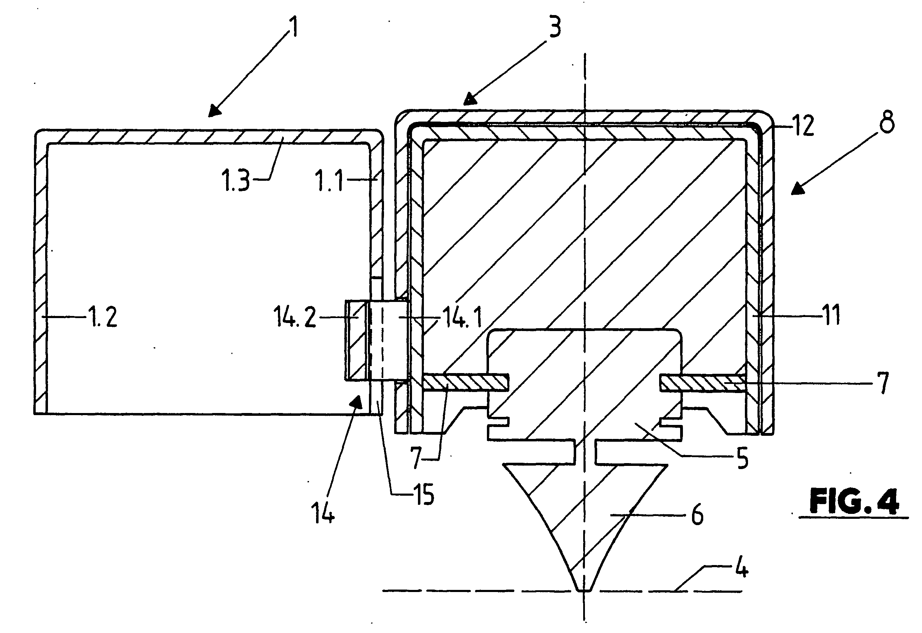

- Fig. 3 u. 4: Schnitte entsprechend den Linien I - I bzw. II-II der Figur 2.

In den Figuren ist 1 ein Wischarm eines Scheibenwischers für Fahrzeuge, beispielsweise für Straßenfahrzeuge. Der Wischarm 1 ist an seinem in den Figuren dargestellten Ende, an dem das Wischblatt 2 mit einer in den Figuren allgemein mit 3 bezeichneten Ver- oder Anbindung (Side-Pin-Anbindung) auswechselbar befestigt ist, als nach unten, d. h. zu der durch die Linie 4 angedeuteten Fahrzeugscheibe hin offenes, U-Profil ausgebildet, und zwar mit den beiden Schenkeln 1.1 und 1.2 sowie mit dem die Schenkel verbindenden Jochabschnitt 1.3.

Das Wischblatt 2, welches sich in Draufsicht auf die Wischarm-Wischblatt-Anordnung, d. h. in Projektion auf die Ebene der Fahrzeugscheibe 4, seitlich vom Wischarm 1 bzw. vom Schenkel 1.1 befindet, ist bei der dargestellten Ausführungsform als flaches Wischblatt ausgebildet, und zwar im Wesentlichen bestehend aus dem Wischergummi 5, der u. a. die auf der Fahrzeugscheibe 4 aufliegende Wischlippe 6 bildet, sowie aus den in seitlichen Nuten des Wischergummis 5 teilweise aufgenommenen und sich über die gesamte Wischblattlänge erstreckenden Federschienen 7, die an den nicht dargestellten Enden des Wischblattes 2 durch geeignete Mittel in den Nuten des Wischergummis 5 gehalten sind. Zwischen den beiden Enden, d. h. in der Mitte oder annähernd in der Mitte, des Wischblattes 2 ist auf diesem ein Lager- oder Verbindungselement 8 befestigt, welches bei der dargestellten Ausführungsform den Wischergummi 5 einschließlich der Federschienen 7 an der Oberseite reiterartig übergreift und für eine lösbare Befestigung des Wischblattes 2 seitlich auf einem über eine Längsseite des Wischarmes 1, nämlich über den Schenkel 1.1, wegstehenden und am Wischarm 1 bzw. an den beiden Schenkeln 1.1 und 1.2 befestigten Pin oder Verbindungszapfen 9 gehalten ist.

Bei der dargestellten Ausführungsform ist das Verbindungsstück 8 mehrteilig ausgebildet, d. h. es besteht aus einem innen liegenden Teil oder Tragelement 10, welches bei der dargestellten Ausführungsform ein Formteil aus Kunststoff ist und unmittelbar auf dem Wischergummi angeordnet diesen Wischergummi und auch die beiden Federschienen 7 formschlüssig übergreift.

Auf dem inneren Teil 10 ist ein im Wesentlichen U-förmig aus einem korrosionsbeständigem Metallblech durch Stanzen und Biegen hergestelltes Verstärkungs- oder Sicherungselement 11 angeordnet, und zwar derart dass dieses das innen liegende Teil 10 an der dem Wischergummi 5 abgewandten Oberseite sowie an den beiden, sich in Längsrichtung des Wischblattes 2 erstreckenden Seitenflächen unmittelbar übergreift und mit dem innen liegenden Teil 10 verbunden ist. Auf dem Sicherungselement 11 ist eine äußere Abdeckkappe 12 aus einem geeigneten Material, beispielsweise aus Kunststoff aufgesetzt und befestigt, die sowohl das innen liegende Teil 10 als auch das Sicherungselement 11 abdeckt und somit die Außenfläche des Verbindungsstückes 8 bildet.

Sämtliche Elemente 10 - 12 besitzen jeweils achsgleich miteinander angeordnete Öffnungen, die sich zu einer Lager- oder Verbindungsöffnung 13 ergänzen, in die bei mit dem Wischarm 1 verbundenem Wischblatt 2 der Verbindungszapfen 9 möglichst spielfrei aufgenommen ist, und zwar derart, dass eine begrenzte Schwenkbewegung des am Wischarm 1 montierten und gegen die Fahrzeugscheibe 4 anliegenden Wischblattes 2 um die Achse des Verbindungszapfens 9 möglich ist.

Zur axialen Sicherung des Wischblattes 2 auf dem Verbindungszapfen 9 ist das Verbindungsstück 8 mit einem Verriegelungselement 14 ausgebildet, welches über die bei montiertem Wischblatt 2 dem Wischarm 1 benachbarte Seite des Verbindungsstück 8 wegsteht und den die benachbarte Seite des Wischarmes 1 bildenden Schenkel 1.1 an der Schenkelinnenfläche hintergreift. Bei der dargestellten Ausführungsform weist der Schenkel 1.1 eine schlitzförmige Öffnung 15 auf, die sich ausgehend von dem unteren, freien Rand des Schenkels 1.1 in Richtung zum Jochabschnitt 1.3 hin erstreckt, und zwar bei der dargestellten Ausführungsform um die Achse des Verbindungszapfens 9 bogenförmig gekrümmt.

Bei am Wischarm 1 befestigten und axial gesicherten Wischblatt 2 durchgreift das Verriegelungselement 14 mit einem sich parallel oder in etwa parallel zur Achse des Verbindungszapfens verlaufenden und von diesem radial beabstandeten Abschnitt 14.1 die schlitzförmige Öffnungen 15 und hintergreift dann den Schenkel 1.1 an seiner Innenfläche im Bereich des Randes der Öffnung 15 mit einer Abwinklung 14.2 oder einem verbreiterten Kopfstück. Die Ausbildung ist dabei so getroffen, dass in jeder während des normalen Betriebs der Scheibenwischeranlage möglichen Position des Wischblattes 2 relativ zum Wischarm 1 diese axiale Sicherung durch das Verriegelungselement 14 zuverlässig gegeben ist.

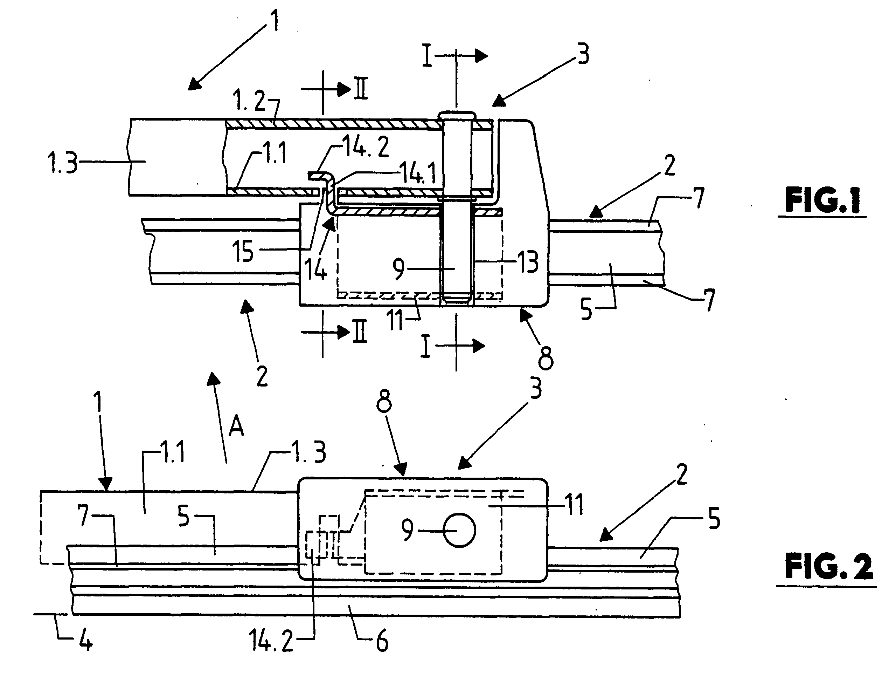

Zum Montieren des Wischblattes 2 am Wischarm 1 oder zum Auswechseln eines vorhandenen Wischblattes 2 gegen ein neues Wischblatt 2 wird der Wischarm 1, der in üblicher Weise durch wenigstens eine Feder in seine das Wischblatt 2 gegen die Fahrzeugscheibe 4 andrückende Position vorgespannt ist, entsprechend dem Pfeil A der Figur 2 von der Fahrzeugscheibe 4 weg geschwenkt, sodass dann, beispielsweise zum Abnehmen eines vorhandenen Wischblattes 2, dieses soweit um die Achse des Verbindungszapfens 9 geschwenkt werden kann, bis das Verriegelungselement 14 außer Eingriff mit dem Wischarm 1 bzw. mit dem Schenkel 1.1 kommt, so dass das Wischblatt 2 vom Verbindungszapfen 9 abgezogen werden kann. Das Befestigen des Wischblattes 2 am Wischarm 1 erfolgt analog in umgekehrter Weise.

Das Verriegelungselement 14 ist bei der dargestellten Ausführungsform von einer hakenartig abgewinkelten Verlängerung eines Schenkels des Sicherungselementes 11 gebildet. Durch die Herstellung des Sicherungselementes 11 aus Metall und durch die einstückige Ausbildung dieses Sicherungselementes 11 mit dem Verriegelungselement 14 ist auch den speziell bei Fahrzeugen einzuhaltenden hohen Sicherheitsanforderungen voll Rechnung getragen, d. h. selbst bei einem Lösen der Abdeckkappe 12 oder der Verbindung zwischen den Elementen 10 und 11 ist das Wischblatt 2 weiterhin noch durch den gemeinsamen Verbindungszapfen 9 und durch das das innere Teil 10 gabelartig übergreifende und einstückig mit dem Verriegelungselement 14 hergestellte Sicherungselement 11 am Wischarm 1 gehalten.

Die Erfindung wurde voranstehend an einem Ausführungsbeispiel beschrieben. Es versteht sich, dass zahlreiche Änderungen sowie Abwandlungen möglich sind, ohne das dadurch der die Erfindung tragende Gedanke verlassen wird.

So ist es beispielsweise möglich, auf die Abdeckkappe 12 zu verzichten und dafür das Sicherungselement 11 mit einem geeigneten Kunststoff zu umspritzen und in geeigneter Weise mit dem innen liegenden Teil 10 zu verbinden, und zwar zumindest derart, dass eine bequeme Montage ohne ein Verrutschen der Teile relativ zueinander möglich ist.

Grundsätzlich besteht weiterhin auch die Möglichkeit, das Verbindungsstück 8 des Wischblattes 2 für die Side-Pin-Anbindung einstückig herzustellen, und zwar dann wiederum mit einem das Verriegelungselement 14 für die axiale Sicherung bildenden im Kunststoff eingebetteten bzw. umspritzten und aus Metall gefertigten Verstärkungs- und Sicherungselement, welches das Wischblatt 2 bzw. dessen Wischergummi 5 gabel- oder reiterartig zumindest mittelbar übergreift.

### Bezugszeichenliste

- 1: Wischarm
- 1.1, 1.2: Schenkel
- 1.3: Jochabschnitt
- 2: Wischblatt
- 3: Side-Pin-Anbindung für das Wischblatt 2 am Wischarm 1
- 4: Fahrzeugscheibe
- 5: Wischergummi
- 6: Wischlippe
- 7: Federschiene
- 8: Verbindungsstück
- 9: Pin oder Verbindungszapfen am Wischarm 1
- 10: inneres Element des Verbindungsstücks 8
- 11: Verstärkungs- und Sicherungselement des Verbindungsstücks 8
- 12: Abdeckkappe des Verbindungsstücks 8
- 13: Verbindungsöffnung für den Verbindungszapfen 9
- 14: Verriegelungselement
- 14.1, 14.2: Abschnitt des Verriegelungselementes
- 15: schlitzförmige Öffnung
- A: Schwenkrichtung beim Abheben des Wischarmes 1 von der Fahrzeugscheibe 4

## Patentansprüche

1. Verbindung zwischen einem Wischarm (1) einer Scheibenwischeranlage und einem an einem Ende des Wischarmes (1) vorgesehenen und zumindest im Bereich der Verbindung (3) in Projektion auf eine Fahrzeugscheibe (4) seitlich von einer Wischarmseite angeordneten Wischblatt (2), welches mit einer Lageröffnung (13) in einem wischblattseitigen Verbindungsstück (8) axial auf einen über die Wischarmseite (1.1) wegstehenden wischarmseitigen Verbindungszapfen (9) aufgeschoben und durch anschließendes Schwenken um die Achse dieses Verbindungszapfens durch einander hintergreifende Verriegelungsflächen axial am Verbindungszapfen (9) gesichert ist, wobei eine der Verriegelungsflächen an einem Verriegelungselement (14) gebildet ist, welches von einer dem Wischarm (1) benachbarten Seite des Verbindungsstücks (8) wegsteht und bei am Wischarm (1) axial gesichertem Wischblatt (2) eine dem Verbindungsstück (8) benachbarte Fläche (1.1) des Wischarmes hintergreift, **dadurch gekennzeichnet, dass** der Wischarm (1) an seiner dem Verbindungsstück (8) benachbarten Fläche (1.1) eine Verriegelungsöffnung (15) aufweist durch die im axial gesicherten Zustand des Wischblattes (2) das Verriegelungselement (14) mit seinem den Wischarm (1) hintergreifender Sicherungsabschnitt (14.2) hindurchreicht

2. Verbindung nach Anspruch 1, **dadurch gekennzeichnet, dass** die Verriegelungsöffnung (15) schlitzartig ausgebildet und mit ihrer Längserstreckung quer zur Längsachse des Wischarmes (1) orientiert ist.

3. Verbindung nach Anspruch 1 oder 2, **dadurch gekennzeichnet, dass** die Verriegelungsöffnung (15) kreisbogenförmig oder annähernd kreisbogenförmig um die Achse des Verbindungszapfens (9) ausgebildet ist.

4. Verbindung nach einem der vorhergehenden Ansprüche, **dadurch gekennzeichnet, dass** der Wischarm (1) im Bereich der Verbindung (3) als U-Profil ausgebildet ist, und dass die dem Wischblatt (2) benachbarte Fläche ein Schenkel (1.1) dieses U-Profils ist.

5. Verbindung nach einem der vorhergehenden Ansprüche, **dadurch gekennzeichnet, dass** das Verriegelungselement (14) von einem Formteil (11) oder einem Abschnitt eines Formteils (11) aus Metallblech gebildet ist, welches bei am Wischarm (1) montiertem Wischblatt (2) auf den Verbindungszapfen (9) aufgeschoben ist.

6. Verbindung nach Anspruch 5, **dadurch gekennzeichnet, dass** das Formteil (11) ein das Wischblatt (2) oder einen Wischergummi (5) mit Federschienen (7) unmittelbar oder mittelbar übergreifendes U-Profil bildet.

7. Verbindung nach Anspruch 6, **dadurch gekennzeichnet, dass** in jedem Schenkel (11.1, 11.2) des U-Profils des Formteils (11) jeweils eine Öffnung für den Verbindungszapfen (9) vorgesehen ist.

8. Verbindung nach Anspruch 6 oder 7, **dadurch gekennzeichnet, dass** das Formteil (11) als Sicherungs- und/oder Verstärkungselement mit seinen Schenkeln (11.1, 11.2) ein Trag- oder Halteelement (10) für den Wischergummi (5) sowie gegebenenfalls für weitere Funktionselemente des Wischblattes, beispielsweise für Federschienen (7) übergreift.

9. Verbindung nach Anspruch 5, **dadurch gekennzeichnet, dass** Formteil (11) durch eine Abdeckkappe (12) abgedeckt ist.

10. Verbindung nach Anspruch 8 oder 9, **dadurch gekennzeichnet, dass** das Tragelement (10) und/oder die Abdeckkappe (12) Formteile aus Kunststoff sind.

11. Verbindung nach Anspruch 5, **dadurch gekennzeichnet, dass** das Verriegelungselement (14) und/oder das Formteil (11) mit Kunststoff umspritzt sind.

12. Verbindung nach einem der vorhergehenden Ansprüche, **dadurch gekennzeichnet, dass** das Verriegelungselement (14) an einem die axiale Sicherung bewirkenden Teilabschnitt (14.2) hakenartig oder in Form eines verbreiterten Kopfstückes ausgebildet ist.

13. Scheibenwischeranordnung für Fahrzeuge, mit wenigstens einem Wischarm (1) und einem an einem freien Ende des Wischarmes über eine Verbindung (3) austauschbar vorgesehenen Wischblatt (2), **dadurch gekennzeichnet, dass** die Verbindung entsprechend einem der vorhergehenden Ansprüche ausgebildet ist.

## Claims

1. Connection between a wiper arm (1) of a windscreen wiper module and a wiper blade (2) provided on an end of the wiper arm (1) and arranged laterally from a wiper arm side at least in the area of the connection (3) in projection on a vehicle windscreen (4), which (wiper blade) is pushed fitted with a bearing opening (13) in a connecting piece (8) on the wiper blade side axially on to a connecting stud (9) on the wiper arm side projecting over the wiper arm side (1.1) and is secured axially on the connecting stud (9) by subsequent pivoting around the axis of this connecting stud by locking surfaces engaging behind each other, with one of the locking surfaces being formed on a locking element (14), which projects from a side of the connecting piece (8) adjacent to the wiper arm (1) and which with the wiper blade (2) axially secured on the wiper arm (1) engages behind a surface (1.1) of the wiper arm adjacent to the connecting piece (8), **characterised in that** the wiper arm (1), on its surface (1.1) adjacent to the connecting piece (8) presents a locking opening (15) through which with the wiper blade (2) in the axially secured state, the locking element (14) passes with its securing section (14.2) engaging behind the wiper arm (1).

2. Connection according to claim 1, **characterised in that** the locking opening (15) is designed in the manner of a slot and is oriented in its longitudinal plane transversely to the longitudinal axis of the wiper arm (1).

3. Connection according to claim 1 or 2, **characterised in that** the locking opening (15) is designed in a circular arc or approximately circular arc shape around the axis of the connecting stud (9).

4. Connection according to one of the above claims, **characterised in that** the wiper arm (1) is designed as a U profile in the area of the connection (3) and that the surface adjacent to the wiper blade (2) is a shank (1.1) of this U profile.

5. Connection according to one of the above claims, **characterised in that** the locking element (14) is formed of a moulded component (11) or a section of a moulded component (11) from sheet metal, which is pushed on to the connecting stud (9) with the wiper blade (2) installed on the wiper arm (1).

6. Connection according to claim 5, **characterised in that** the moulded component (11) forms a U profile indirectly or directly overlapping the wiper blade (2) or a wiping rubber (5) with spring rails (7).

7. Connection according to claim 6, **characterised in that** one opening respectively for the connecting stud (9) is provided in each shank (11.1, 11.2) of the U profile of the moulded component (11).

8. Connection according to claim 6 or 7, **characterised in that** the moulded component (11) overlaps with its shanks (11.1, 11.2) as a securing and/or reinforcing element a supporting or holding element (10) for the wiping rubber (5) and for other functional elements of the wiper blade if appropriate, for example for spring rails (7).

9. Connection according to claim 5, **characterised in that** the moulded component (11) is covered by a cover cap (12).

10. Connection according to claim 8 or 9, **characterised in that** the support element (10) and/or the cover cap (12) are plastic moulded components.

11. Connection according to claim 5, **characterised in that** the locking element (14) and/or the moulded component (11) are overmoulded with plastic.

12. Connection according to one of the above claims, **characterised in that** the locking element (14) is designed in the manner of a hook or in the shape of a broadened head end at a subsection (14.2) effecting axial securing.

13. Windscreen wiper arrangement for vehicles, with at least one wiper arm (1) and a wiper blade (2) provided so as to be replaceable on one free end of the wiper arm through a connection (3), **characterised in that** the connection is designed according to one of the above claims.

## Revendications

1. Liaison entre un porte balai (1) d'un système d'essuie-glace et un balai (2) prévu à une extrémité du porte balai (1) et disposé au moins dans la zone de la liaison (3) en projection sur une vitre de véhicule (4) latéralement par rapport à un côté du porte balai, lequel balai (2) est poussé par un orifice d'appui (13) dans une pièce de liaison (8) côté balai axialement sur un pivot de liaison de la face (1.1) du porte balai à distance côté porte balai, et est ensuite fixé axialement par pivotement autour de l'axe dudit pivot de liaison par des surfaces de verrouillage s'engrenant l'une avec l'autre par l'arrière, une des surfaces de verrouillage étant formée sur un élément de verrouillage (14) qui est à distance de la face de la pièce de liaison (8) adjacente au porte balai (1) et engrène par l'arrière une des surfaces (1.1) du porte balai adjacente à la pièce de liaison (8), **caractérisée en ce que** le porte balai (1) présente sur sa surface (1.1) adjacente à la pièce de liaison (8) une ouverture de verrouillage (15) que l'élément de verrouillage, à l'état fixé axialement du balai (2), traverse par sa section de fixation (14.2) engrenant le porte balai (1) par l'arrière.

2. Liaison selon la revendication 1, **caractérisée en ce que** l'ouverture de verrouillage (15) est réalisée en forme de fente et orientée par son étendue longitudinale transversalement à l'axe longitudinal du porte balai (1).

3. Liaison selon la revendication 1 ou 2, **caractérisée en ce que** l'ouverture de verrouillage (15) est réalisée en forme d'arc de cercle ou à peu près en forme d'arc de cercle autour de l'axe du pivot de liaison (9).

4. Liaison selon une des revendications précédentes, **caractérisée en ce que** le porte balai (1) est réalisé dans la zone de la liaison (3) sous la forme d'un profilé en U, et **en ce que** la surface adjacente au balai (2) est une branche (1.1) dudit profilé en U.

5. Liaison selon une des revendications précédentes, **caractérisée en ce que** l'élément de verrouillage (14) est formé par une pièce moulée (11) ou une section d'une pièce moulée (11) constituée de tôle métallique qui est poussée sur le pivot de liaison (9) lorsque le balai (2) est monté sur le porte balai (1).

6. Liaison selon une des revendications précédentes, **caractérisée en ce que** la pièce moulée (11) forme un profilé en U engrenant par le haut directement ou indirectement le balai (2) ou une lame (5) comportant des baguettes flexibles (7).

7. Liaison selon la revendication 6, **caractérisée en ce que** qu'un orifice destiné au pivot de liaison (9) est prévu dans chaque branche (1.1, 1.2) du profil en U de la pièce moulée (11).

8. Liaison selon la revendication 6 ou 7, **caractérisée en ce que** la pièce moulée (11) en tant qu'élément de fixation et/ou de renforcement engrène par le haut par ses branches (1.1, 1.2) un élément de support ou de retenue (10) de la lame (5) ainsi que le cas échéant d'autres éléments fonctionnels du balai, par exemple les baguettes flexibles (7).

9. Liaison selon la revendication 5, **caractérisée en ce que** la pièce moulée (11) est recouverte par un capot de protection (12).

10. Liaison selon la revendication 8 ou 9, **caractérisée en ce que** l'élément de support (10) et/ou le capot de protection (12) sont des pièces moulées en matière plastique.

11. Liaison selon la revendication 5, **caractérisée en ce que** l'élément de verrouillage (14) et/ou la pièce moulée (11) sont en matière plastique moulée par injection.

12. Liaison selon une des revendications précédentes, **caractérisée en ce que** l'élément de verrouillage (14) est réalisé sur une section partielle (14.2) assurant la fixation axiale en forme de crochet ou sous la forme d'une partie frontale élargie.

13. Agencement d'essuie-glace destiné à des véhicules, comportant au moins un porte balai (1) et un balai (2) remplaçable prévu à une extrémité libre du porte balai par l'intermédiaire d'une liaison (3), **caractérisé en ce que** la liaison est réalisée conformément à une des revendications précédentes.
